(19) **Europäisches Patentamt**
**European Patent Office**
**Office européen des brevets**

(11) Veröffentlichungsnummer: **0 322 524 B1**

(12) # EUROPÄISCHE PATENTSCHRIFT

(45) Veröffentlichungstag der Patentschrift:
07.08.91 Patentblatt 91/32

(51) Int. Cl.$^5$: **B60T 13/56**

(21) Anmeldenummer: **88117007.0**

(22) Anmeldetag: **13.10.88**

(54) Tandembremskraftverstärker für Kraftfahrzeuge.

(30) Priorität: **24.12.87 DE 3744012**

(43) Veröffentlichungstag der Anmeldung:
**05.07.89 Patentblatt 89/27**

(45) Bekanntmachung des Hinweises auf die
Patenterteilung:
**07.08.91 Patentblatt 91/32**

(84) Benannte Vertragsstaaten:
**DE ES FR GB IT**

(56) Entgegenhaltungen:
**DE-A- 2 908 481**
**DE-A- 3 303 577**
**US-A- 3 613 506**
**US-A- 4 069 742**

(73) Patentinhaber: **ALFRED TEVES GMBH**
**Guerickestrasse 7**
**W-6000 Frankfurt/Main 90 (DE)**

(72) Erfinder: **Jakobi, Ralf**
**Eppsteiner Weg 14**
**W-6237 Liederbach (DE)**

## Beschreibung

Die Erfindung betrifft einen Tandembremskraftverstärker für Kraftfahrzeuge mit einem Gehäuse, dessen Inneres mit Hilfe einer Trennwand in einen vorderen und einen hinteren Verstärkerraum unterteilt ist, mit einer ersten sowie einer zweiten beweglichen Wand, die den vorderen bzw. den hinteren Verstärkerraum in eine erste Unterdruckkammer und eine erste Arbeitskammer bzw. eine zweite Unterdruckkammer und eine zweite Arbeitskammer unterteilen, einem in Betätigungsrichtung verschiebbaren Steuergehäuse mit einer darin angeordneten Ventileinrichtung, die mittels einer mit einem Bremspedal in Verbindung stehenden Betätigungsstange betätigbar ist und den Durchlaß von Außenluft in die Arbeitskammern steuert, sowie mit einer mit dem Steuergehäuse zusammenwirkenden Druckstange, die die Bremskraft auf einen Betätigungskolben eines am Gehäuse angebrachten Hauptzylinders überträgt, wobei sowohl die Unterdruckkammern als auch die Arbeitskammern mittels im Steuergehäuse ausgeformter Unterdruck- bzw. Belüftungskanäle miteinander verbunden sind und die erste bewegliche Wand an einer axialen Verlängerung des Steuergehäuses angeordnet ist, die durch die Trennwand hindurchragt und sich in den ersten Verstärkerraum erstreckt.

Ein derartiger Tandembremskraftverstärker ist z.B. aus der US 3,613,506 bekannt. Die Belüftung der Arbeitskammern erfolgt bei diesem vorbekannten Tandembremskraftverstärker über im Steuergehäuse ausgebildete Luftführungskanäle, die einerseits in der ersten Arbeitskammer und andererseits in einem von der zweiten Unterdruckkammer getrennten, pneumatischen Raum münden, der gegenüber der zweiten Unterdruckkammer durch eine kleine Rollmembran abgedichtet und mittels des die zweite bewegliche Wand bildenden Membrantellers begrenzt ist. Der Membranteller ist in seinem dem Steuergehäuse benachbarten Bereich mit Luftdurchtrittsöffnungen versehen, die die Belüftung der zweiten Arbeitskammer ermöglichen.

Um die Belüftungskanäle im Steuergehäuse herstellen und die kleine Rollmembran sowie ein zum Steuerventil gehörendes Dichtelement im Steuergehäuse dicht befestigen zu können, besteht das Steuergehäuse aus zwei ineinander geschobenen Teilen, die mittels Schraubbolzen gegeneinander verspannt sind.

Als nachteilig wird bei dem vorbekannten Bremskraftverstärker vor allem der komplizierte und kostenintensive Aufbau der Steuergruppe sowie die verhältnismäßig schlechte Ansprechzeit des Gerätes infolge komplizierter Ausbildung der Belüftungskanäle empfunden. Ein weiterer Nachteil kann im hohen Gewicht des Bremskraftverstärkers gesehen werden, das auf die Verwendung von mehreren metallischen Schraubbolzen zurückzuführen ist.

Weniger vorteilhaft anzusehen ist auch die hohe Anzahl der Dichtstellen, die durch die zweiteilige Ausführung des Steuergehäuses bedingt ist.

Es ist daher Aufgabe der Erfindung, den Aufbau der Steuergruppe, insbesondere im Bereich der Belüftungskanäle bei gleichzeitiger Reduzierung des Gewichts des Bremskraftverstärkers wesentlich zu vereinfachen.

Es hat sich nun gezeigt, daß diese Aufgabe in überraschend einfacher und technisch fortschrittlicher Weise durch einen Tandembremskraftverstärker der eingangs genannten Art gelöst werden kann, dessen Weiterbildung darin besteht, daß die Belüftungskanäle als Axialnuten ausgebildet und mittels einer Dichthülse radial begrenzt sind, die abgedichtet auf der Verlängerung des Steuergehäuses angeordnet ist.

Eine besonders stabile Ausführung des Erfindungsgegenstandes wird dadurch erreicht, daß die zweite bewegliche Wand am Steuergehäuse an der Dichthülse anliegend angeordnet ist, so daß die Übertragung deren Verstärkungskraft auf das Steuergehäuse über die Dichthülse erfolgt. Zu diesem Zweck ist die Dichthülse mit einem Bund versehen, der mit einer am Steuergehäuse ausgebildeten Ringfläche zusammenwirkt.

Weitere Einzelheiten und Vorteile des erfindungsgemäßen Tandem-Bremskraftverstärkers ergeben sich aus der nachfolgenden Beschreibung von zwei Ausführungseispielen der Erfindung, die anhand der beiliegenden Zeichnung näher erläutert sind, wobei die einander entsprechenden Teile mit den gleichen Bezugszeichen versehen sind.

Es zeigt

Fig. 1     einen Teil-Längsschnitt einer ersten Ausführung des Tandembremskraftverstärkers nach der Erfindung ;

Fig. 2     eine zweite Ausführung des Steuergehäuses des Tandembremskraftverstärkers nach der Erfindung in Axialschnitt und vergrößertem Maßstab ;

Fig. 3     das Steuergehäuse des Tandembremskraftverstärkers nach Fig. 1 in Längsschnitt und vergrößertem Maßstab und

Fig. 4     den Schnitt A-A nach Fig. 3.

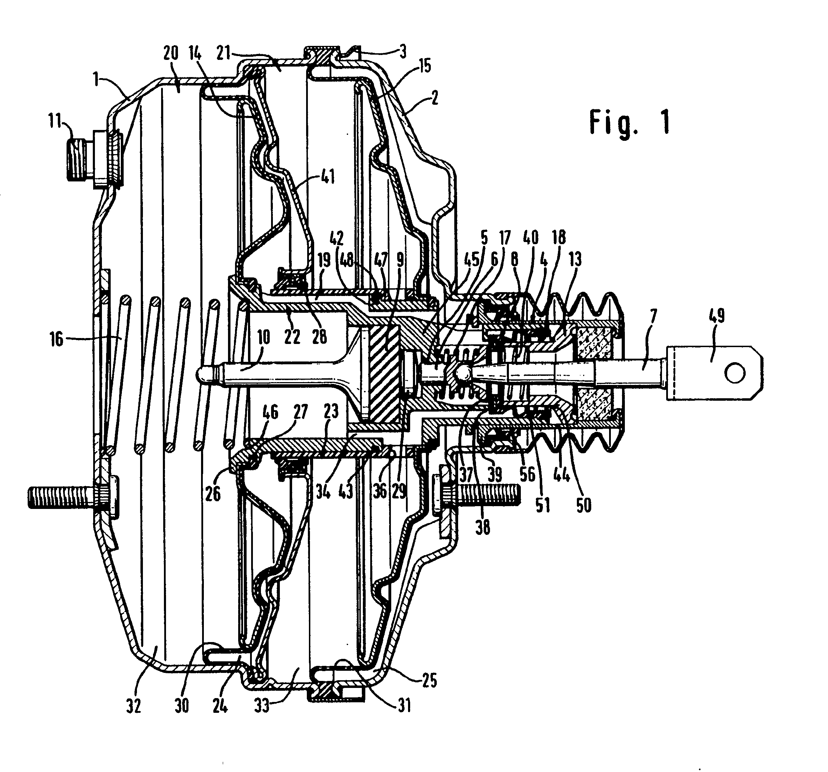

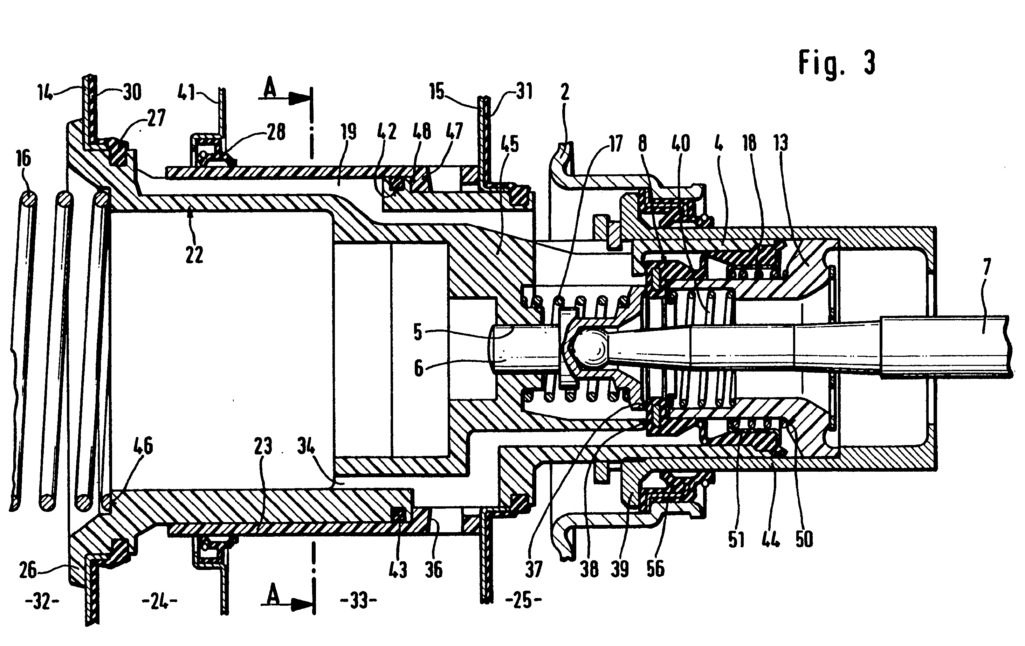

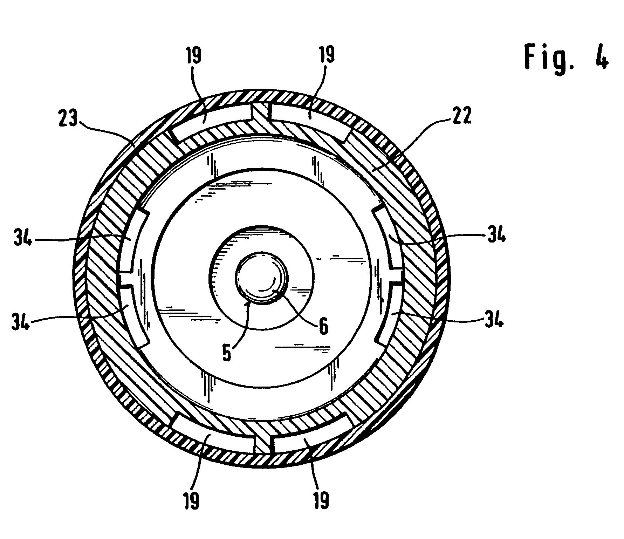

Der in Fig. 1, 3 und 4 dargestellte Tandembremskraftverstärker weist ein Gehäuse auf, das durch zwei schalenförmige Gehäusehälften 1, 2 gebildet ist, die mit Hilfe eines Spannrings 3 zusammengehalten sind. Das Innere des Gehäuses wird mittels einer darin abgedichtet angeordneten Trennwand 41 in einen vorderen (hauptzylinderseitigen) Verstärkerraum 20 sowie einen hinteren (bremspedalseitigen) Verstärkerraum 21 aufgeteilt, wobei der vordere Verstärkerraum 20 durch eine erste bewegliche Wand 14 in eine erste Unterdruckkammer 32 konstanten Druckes und eine erste Arbeitskammer 24 veränderlichen Druckes und der hintere Verstärkerraum 21 durch eine zweite bewegliche Wand 15 in eine zweite Unterdruckkammer 33 und eine zweite Arbeitskammer 25 unterteilt sind. Die vordere Gehäusehälfte 1 ist mit einem Unterdruckanschluß 11 versehen, mittels dessen die erste Unterdruckkammer 32 an eine geeignete Unterdruckquelle, beispielsweise einen Ansaugkrümmer des Kraftfahrzeugmotors, angeschlossen werden kann.

In einem axialen Abschnitt kleineren Durchmessers der hinteren Gehäusehälfte 2 ist ein zweiteilig ausgebildetes Steuergehäuse 4 geführt, das durch einen Führungsteil 44 sowie einen Vorderteil 45 gebildet ist. Im Inneren des Steuergehäuses 4 ist eine aus einer Kolbenstange 7 und einem Ventilkolben 6 zusammengesetze Steuerstange axial verschiebbar angeordnet, die über einen Gabelkopf 49 mit einem nicht dargestellten Bremspedal eines Kraftfahrzeugs verbunden ist. Das Steuergehäuse 4 enthält ferner eine Ventilanordnung 8, 37, 38, die von Ventilkolben 6 betätigt wird und über Unterdruckkanäle 34 und Belüftungskanäle 19 die Druckdifferenz zwischen den Unterdruckkammern 32, 33 und den Arbeitskammern 24, 25 steuert. Der die zweite bewegliche Wand 15 tragende Vorderteil 45 des Steuergehäuses 4 weist eine axiale Bohrung 5 auf, in der der Ventilkolben 6 verschiebbar geführt ist und die in einen Abschnitt größeren Durchmessers übergeht, in dem eine Übersetzungsscheibe 29 angeordnet ist, die mit einer gummielastischen Reaktionsscheibe 9 zusammenwirkt, die mit einer einen nicht dargestellten Hauptzylinder betätigenden Druckstange 10 in kraftübertragender Verbindung steht.

An seinem hauptzylinderseitigen Ende weist der Vorderteil 45 des Steuergehäuses 4 schließlich eine bis in die erste Unterdruckkammer 32 hinausragende axiale Verlängerung 22 auf, die sich durch die Trennwand 41 hindurch erstreckt und an der Durchtrittsstelle mittels eines Dichtringes 28 abgedichtet ist. Zum Zurückstellen der beweglichen Wände 14, 15 ist eine Rückstellfeder 16 vorgesehen, die zwischen der hauptzylinderseitigen Gehäusehälfte 1 und einer an der axialen Verlängerung 22 an deren vorderem Ende ausgebildeten Ringfläche 46 eingespannt ist. Die erste bewegliche Wand 14 weist eine in der ersten Arbeitskammer 24 daran anliegende erste Rollmembran 30 auf, die mit ihrem inneren Abschnitt den Innenrand der ersten beweglichen Wand 14 umgreift, während deren Wulst 27 die bewegliche Wand 14 gegenüber der axialen Verlängerung 22 abdichtet. Die bewegliche Wand 14 stützt sich dabei an einem an der Verlängerung 22 des Steuergehäuses 4 bzw. 45 ausgebildeten radialen Ringbund 26 axial ab.

Die im Vorderteil 45 des Steuergehäuses 4 vorzugsweise als Axialnuten ausgebildeten Belüftungskanäle 19 werden radial nach außen hin mittels einer auf der axialen Verlängerung 22 aufgeschobenen Dichthülse 23 begrenzt, deren Bund 47 mit einer Ringfläche 48 am Vorderteil 45 des Steuergehäuses 4 zusammenwirkt. In der unmittelbaren Nähe der Ringfläche 48 ist der Vorderteil 45 mit einer Radialnut 42 versehen, in der ein die Dichthülse 23 gegenüber dem Vorderteil 45 abdichtender O-Ring 43 angeordnet ist. Die Anordnung der zweiten beweglichen Wand 15 am Vorderteil 45 des Steuergehäuses 4 ist dabei vorzugsweise derart getroffen, daß eine zweite Rollmembran 31, den Innenrand der zweiten beweglichen Wand 15 umgreifend, im Vorderteil 45 des Steuergehäuses 4 eingeknöpft ist, wobei der radial innenliegende Abschnitt der beweglichen Wand 15 an der Dichthülse 23 axial abgestützt ist, so daß die Übertragung der Verstärkungskraft der zweiten beweglichen Wand 15 auf das Steuergehäuse 4 über die Dichthülse 23 erfolgt. Die Verbindung der zweiten Unterdruckkammer 33 mit den im Vorderteil 45 des Steuergehäuses 4 ausgeformten Unterdruckkanälen 34 wird durch mehrere Durchtrittsöffnungen 36 ermöglicht, mit denen die Dichthülse 23 im Bereich ihres steuerkolbenseitigen Endes versehen ist.

Die Steuerbaugruppe des Vakuumbremskraftverstärkers ist in der Lösestellung dargestellt, d.h. in einer Stellung, in der die beiden Unterdruckkammern 32, 33 von den Arbeitskammern 24, 25 getrennt sind. In dieser Stellung liegen nämlich die beiden Dichtsitze 37, 38 an der Dichtfläche des Tellerventils 8 an, das auf seiner der Dichtfläche abgewandten Seite einen Anschlag aufweist, der über eine Hülse 13 am Führungsteil 44 anschlägt. Der Führungsteil 44 liegt in der Lösestellung mit seinem Kragen 39 an einem Gleitführungsring 56 an, wobei der Dichtsitz 37 am Ventilkolben 6 von einer Kolbenstangenrückholfeder 17 gegen die Dichtfläche des Tellerventils 8 gedrückt wird. Das Tellerventil 8 wird gleichzeitig in Richtung auf die beiden Dichtsitze 37, 38 zu mittels einer Druckfeder 40 vorgespannt, die sich mit deren anderem Ende an der Hülse 13 abstützt. Außerdem ist eine zweite Druckfeder 18 vorgesehen, die sich einerseits an einer Führung 51 des Tellerventils 8 und andererseits an einer ringförmigen Fläche 50 der Hülse 13 abstützt und die beiden Steuergehäuseteile 44, 45 auseinanderhält.

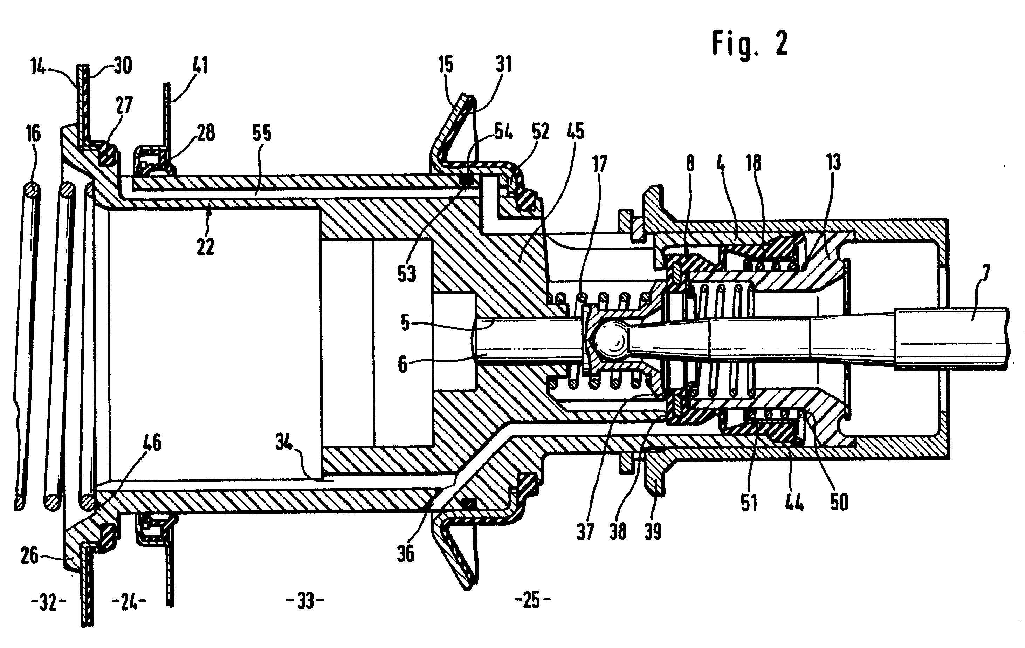

Bei der in Fig. 2 gezeigten Ausführungsform des erfindungsgemäßen Tandembremskraftverstärkers sind die Belüftungskanäle 19 durch in der axialen Verlängerung 22 bzw. dem Vorderteil 45 des Steuergehäuses 4 eingeformte axiale Durchgänge 55 gebildet. Die Übertragung der Verstärkungskraft erfolgt direkt auf den Vorderteil 45 des Steuergehäuses 4, und zwar mittels einer an der zweiten beweglichen Wand 15 ausgebildeten, sich radial nach innen erstreckenden Ringfläche 52, die sich im Befestigungsbereich der zweiten beweglichen Wand 15 unmittelbar am Vorderteil 45 des Steuergehäuses 4 axial abstützt. Die Abdichtung der zweiten Unterdruckkammer 33 gegenüber den Belüftungskanälen 19 erfolgt mittels eines in einer in der Oberfläche des Vorderteils 45 ausgebildeten Ringnut 53 angeordneten Dichtrings 54.

Bezugszeichenliste

| | |
|---|---|
| 1 | Gehäusehälfte |
| 2 | Gehäusehälfte |
| 3 | Spannring |
| 4 | Steuergehäuse |
| 5 | Bohrung |
| 6 | Ventilkolben |
| 7 | Betätigungsstange |
| 8 | Tellerventil |
| 9 | Reaktionsscheibe |
| 10 | Druckstange |
| 11 | Unterdruckanschluß |
| 12 | Luftfilter |
| 13 | Hülse |
| 14 | erste bewegliche Wand |
| 15 | zweite bewegliche Wand |
| 16 | Rückholfeder |
| 17 | Ventilfeder |
| 18 | Feder |
| 19 | Belüftungskanal |
| 20 | vorderer Verstärkerraum |
| 21 | hinterer Verstärkeraum |
| 22 | Verlängerung |
| 23 | Dichthülse |
| 24 | erste Arbeitskammer |
| 25 | zweite Arbeitskammer |
| 26 | Ringbund |
| 27 | Wulst |
| 28 | Dichtring |
| 29 | Übersetzungsscheibe |
| 30 | erste Rollmembran |
| 31 | zweite Rollmembran |
| 32 | erste Unterdruckkammer |
| 33 | zweite Unterdruckkammer |
| 34 | Unterdruckkanal |
| 36 | Durchtrittsöffnung |
| 37 | Dichtsitz |
| 38 | Dichtsitz |
| 39 | Kragen |
| 40 | Druckfeder |
| 41 | Trennwand |
| 42 | Radialnut |
| 43 | O-Ring |
| 44 | Führungsteil |
| 45 | Vorderteil |
| 46 | Ringfläche |
| 47 | Bund |
| 48 | Ringfläche |
| 49 | Gabelkopf |
| 50 | Fläche |
| 51 | Führung |
| 52 | Ringfläche |

53 Ringnut
54 Dichtring
55 Durchgänge
56 Gleitführungsring

## Patentansprüche

1. Tandembremskraftverstärker für Kraftfahrzeuge mit einem Gehäuse, dessen Inneres mit Hilfe einer Trennwand (41) in einen vorderen (20) und einen hinteren Verstärkerraum (21) unterteilt ist, mit einer ersten (14) sowie einer zweiten beweglichen Wand (15), die den vorderen (20) bzw. den hinteren Verstärkerraum (21) in eine erste Unterdruckkammer (32) und eine erste Arbeitskammer (24) bzw. eine zweite Unterdruckkammer (33) und eine zweite Arbeitskammer (25) unterteilen, einem in Betätigungsrichtung verschiebbaren Steuergehäuse (4) mit einer darin angeordneten Ventileinrichtung, die mittels einer mit einem Bremspedal in Verbindung stehenden Betätigungsstange (7) betätigbar ist und den Durchlaß von Außenluft in die Arbeitskammern (24, 25) steuert, sowie mit einer mit dem Steuergehäuse (4) zusammenwirkenden Druckstange (10), die die Bremskraft auf einen Betätigunskolben eines am Gehäuse angebrachten Hauptzylinders überträgt, wobei sowohl die Unterdruckkammern (32, 33) als auch die Arbeitskammern (24, 25) mittels im Steuergehäuse (4) ausgeformter Unterdruck- bzw. Belüftungskanäle (19) miteinander verbunden sind und die erste bewegliche Wand (14) an einer axialen Verlängerung (22) des Steuergehäuses (4) angeordnet ist, die durch die Trennwannd (41) hindurchagt und sich in den ersten Verstärkerraum (20) erstreckt, dadurch **gekennzeichnet**, daß die Belüftungskanäle (19) als Axialnuten ausgebildet und mittels einer Dichthülse (23) radial begrenzt sind, die abgedichtet auf der Verlängerung (22) des Steuergehäuses (4) angeordnet ist.

2. Tandembremskraftverstärker nach Anspruch 1, dadurch **gekennzeichnet**, daß die zweite bewegliche Wand (15) am Steuergehäuse (4) an der Dichthülse (23) anliegend angeordnet ist, so daß die Übertragung deren Verstärkungskraft auf das Steuergehäuse (4) über die Dichthülse (23) erfolgt.

3. Tandembremskraftverstärker nach Anspruch 1, dadurch **gekennzeichnet**, daß die Dichthülse (23) mit einem Bund (47) versehen ist, der mit einer am Steuergehäuse (4 bzw. 45) ausgebildeten Ringfläche (48) zusammenwirkt.

4. Tandembremskraftverstärker nach einem der Ansprüche 1 bis 3, dadurch **gekennzeichnet**, daß die Dichthülse (23) Durchtrittsöffnungen (36) aufweist, die mit den Unterdruckkanälen (34) in Verbindung stehen.

5. Tandembremskraftverstärker nach Anspruch 1, dadurch **gekennzeichnet**, daß die Abdichtung der Dichthülse (23) gegenüber dem Steuergehäuse (4 bzw. 45) mittels eines in einer Radialnut (42) der Verlängerung (22) eingesetzten O-Ringes (43) erfolgt.

6. Tandembremskraftverstärker nach Anspruch 1, dadurch **gekennzeichnet**, daß die zweite bewegliche Wand (15) im Bereich ihrer Befestigung am Steuergehäuse (4 bzw. 45) eine radiale, sich nach innen erstreckende Ringfläche (52) aufweist, die unmittelbar am Steuergehäuse (4 bzw. 45) axial abgestützt ist.

7. Tandembremskraftverstärker nach Anspruch 1, dadurch **gekennzeichnet**, daß die Abdichtung der zweiten Unterdruckkammer (33) gegenüber den Belüftungskanälen (19) mittels eines in einer in der Oberfläche des Steuergehäuses (4 bzw. 45) ausgebildeten Ringnut (53) angeordneten Dichtringes (54) erfolgt.

8. Tandembremskraftverstärker nach einem der vorhergehenden Ansprüche, dadurch **gekennzeichnet**, daß die Verlängerung (22) des Steuergehäuses (4) an ihrem hauptzylinderseitigen Ende eine radiale Ringfläche (46) aufweist, die der Abstützung einer Rückholfeder (6) dient.

## Claims

1. A tandem brake power booster for automotive vehicles comprising a housing whose internal space is subdivided into a front (20) and a rear booster chamber (21) by means of a partition wall (41), comprising a first (14) and a second movable wall (15) which subdivide the said front (20), respectively the said rear booster chamber (21) into a first vacuum chamber (32) and a first power chamber (24) respectively a second vacuum chamber (33) and a second power chamber (25), a control housing (4) being slidable in the direction of actuation comprising a valve device which is accommodated therein, is actuatable by means of an operating rod (7) linked to a brake pedal and controls the passage of atmospheric air into the said power chambers (24, 25), and comprising a push rod (10) coacting with the said control housing (4) and transmitting the brake power to an actuating piston of a master cylinder secured to the housing, the said vacuum chambers (32, 33) and the said power chambers (24, 25) being connected to each other by way of vacuum ducts (34) and/or ventilating ducts (19) formed in the control housing (4), and the first movable wall (14) being arranged at an axial extension (22) of the control housing (4) which projects through the partition wall (41) and extends into the first booster chamber (20), **characterized** in that the ventilating ducts (19) are designed as axial grooves and are confined in radial direction by means of a sealing sleeve (23) which is sealedly positioned on the said extension (22) of the control housing (4).

2. A tandem brake power booster as claimed in claim 1, **characterized** in that the second movable wall (15) is arranged at the control housing (4) abutting on the sealing sleeve (23) so that its boosting power is transmitted to the control housing (4) through the sealing sleeve (23).

3. A tandem brake power booster as claimed in claim 1, **characterized** in that the sealing sleeve (23) is furnished with a collar (47) which coacts with an annular surface (48) configured at the said control housing (4, respectively 45).

4. A tandem brake power booster as claimed in any one of the claims 1 to 3, **characterized** in that the sealing sleeve (23) is furnished with passage openings (36) which are in connection with the said vacuum ducts (34).

5. A tandem brake power booster as claimed in claim 1, **characterized** in that sealing of the said sealing sleeve (23) with respect to the said control housing (4, respectively 45) is effected by means of an O-ring (43) which is inserted in a radial groove (42) of the said extension (22).

6. A tandem brake power booster as claimed in claim 1, **characterized** in that the second movable wall (15) is furnished in the area of its fixation to the said control housing (4, respectively 45) with a radial, inwardly extending annular surface (52) which is axially supported directly at the said control housing (4, respectively 45).

7. A tandem brake power booster as claimed in claim 1, **characterized** in that sealing of the second vacuum chamber (33) with respect to the said ventilating ducts (19) is effected by means of a sealing ring (54) which is positioned in an annular groove (53) designed in the surface of the said control housing (4, respectively 45).

8. A tandem brake power booster as claimed in any one of the preceding claims, **characterized** in that at its master cylinder side end, the said extension (22) of the said control housing (4) presents a radial annular surface (46) which serves to support a return spring (16).


## Revendications

1. Amplificateur d'effort de freinage tandem pour véhicules automobiles, comprenant un boîtier dont la cavité intérieure est divisée par une paroi séparatrice (41) en un compartiment avant d'amplificateur (20) et un compartiment arrière d'amplificateur (21), une première paroi mobile (14) et une seconde paroi mobile (15) qui divisent respectivement ce compartiment avant d'amplificateur (20) et ce compartiment arrière d'amplificateur (21) l'un en une première chambre à dépression (32) et une première chambre de travail (24) et l'autre en une seconde chambre à dépression (33) et une seconde chambre de travail (25), un boîtier de commande (4) qui est agencé de façon à pouvoir se déplacer en translation suivant la direction de manoeuvre et dans lequel est disposé un mécanisme de soupape qui est agencé de façon à pouvoir être actionné par une tige d'actionnement (7) reliée à une pédale de frein et commande le passage de l'air extérieur vers les chambres de travail (24, 25), et une tige de poussée (10) qui coopère avec ce boîtier de commande (4) et qui transmet l'effort de freinage à un piston d'actionnement d'un maître-cylindre monté sur le boîtier d'amplificateur, les chambres à dépression (32, 33) et les chambres de travail (24, 25) communiquant entre elles, respectivement par des conduits de dépression (34) et des conduits d'introduction d'air (79) ménagés dans le boîtier de commande (4) et la première paroi mobile (14) étant montée sur un prolongement axial (22) de ce boîtier de commande (4) qui traverse la paroi séparatrice (41) et s'étend dans le premier compartiment d'amplificateur (20), caractérisé en ce que les conduits d'introduction d'air (19) sont réalisés sous la forme de rainures axiales et sont délimités radialement par un fourreau d'étanchéité (23) qui est monté, d'une manière étanche, sur le prolongement (22) du boîtier de commande (4).

2. Amplificateur d'effort de freinage tandem suivant la revendication 1, caractérisé en ce que la seconde paroi mobile (15) est montée sur le boîtier de commande (4) en prenant appui sur le fourreau d'étanchéité (23), de sorte que la transmission de l'effort d'amplification de cette seconde paroi mobile (15) au boîtier de commande (4) s'effectue par l'intermédiaire du fourreau d'étanchéité (23).

3. Amplificateur d'effort de freinage tandem suivant la revendication 1, caractérisé en ce que le fourreau d'étanchéité (23) est pourvu d'un collet (47) qui coopère avec une surface annulaire (48) ménagée sur le boîtier de commande (4 ou 45).

4. Amplificateur d'effort de freinage tandem suivant l'une des revendications 1 à 3, caractérisé en ce que le fourreau d'étanchéité (23) comporte des orifices de passage (36) qui communiquent avec les conduits de dépression (34).

5. Amplificateur d'effort de freinage tandem suivant la revendication 1, caractérisé en ce que l'étanchéité du fourreau d'étanchéité (23) vis-à-vis du boîtier de commande (4 ou 45) s'obtient à l'aide d'un joint torique (43) emboîte dans une gorge circonférentielle (42) du prolongement (22).

6. Amplificateur d'effort de freinage tandem suivant la revendication 1, caractérisé en ce que, dans la zone de sa fixation sur le boîtier de commande (4 ou 45), la seconde paroi mobile (15) comporte une surface annulaire radiale (52), s'étendant vers l'intérieur, qui prend axialement appui directement sur ce boîtier de commande (4 ou 45).

7. Amplificateur d'effort de freinage tandem suivant la revendication 1, caractérisé en ce que l'étanchéité de la seconde chambre à dépression (33) vis-à-vis des conduits d'introduction d'air (19) s'obtient à l'aide d'une bague d'étanchéité (54) disposée dans une gorge annulaire (53) ménagée dans la surface du boîtier de commande (4 ou 45).

8. Amplificateur d'effort de freinage tandem suivant l'une des revendications précédentes, caractérisé en ce que, sur son extrémité située du côté du maître-cylindre, le prolongement (22) du boîtier de commande (4) comporte une surface annulaire radiale (46) qui sert à l'appui d'un ressort de rappel (16).

Fig. 1

EP 0 322 524 B1

Fig. 2

EP 0 322 524 B1

Fig. 3

EP 0 322 524 B1

Fig. 4

EP 0 322 524 B1